# EUROPEAN PATENT APPLICATION

(11) **EP 3 879 448 A2**
(43) Date of publication of application: **15.09.2021**
(21) Application number: 21187643.8
(22) Date of filing: 26.07.2021
(51) Int. Cl.: G06K 9/00

(54) **METHOD AND APPARATUS FOR DETECTING AN ABNORMAL DRIVING POSTURE, DEVICE, VEHICLE AND MEDIUM**

(30) Priority: 22.10.2020 CN 202011141832
(71) Applicant: Beijing Baidu Netcom Science and Technology Co., Ltd., Beijing 100085 (CN)
(72) Inventor: WANG, Keyao, Beijing 100085 (CN); FENG, Haocheng, Beijing 100085 (CN); YUE, Haixiao, Beijing 100085 (CN)
(74) Representative: Perronace, Andrea

(57) **Abstract**

Disclosed are a method and apparatus for detecting an abnormal driving posture, a device, a vehicle and a medium, which related to the field of artificial intelligence such as computer vision, deep learning and intelligent transport, and may be specifically used in the scene of added driving. The specific solution is described below. A human body key point is determined according to an acquired original image of a driving user during driving, where the human body key point includes a shoulder key point; and an abnormal driving posture of the driving user is detected according to the shoulder key point. According to embodiments of the present application, the efficiency of detecting the abnormal driving posture of the driving user is improved, and the amount of data calculation is reduced.

## Description

### TECHNICAL FIELD

The present application relates to the field of artificial intelligence, in particular, to computer vision, deep learning and intelligent transport technologies, and specifically, to a method and apparatus for detecting an abnormal driving posture, a device, a vehicle and a medium.

### BACKGROUND

With the improvement of people's living standards, cars have entered thousands of households, and the driving safety of cars gradually becomes a concern of people. When a user drives a vehicle, an abnormal posture of the user often leads to a safety accident. To reduce potential safety hazards in a driving process, it is crucial to monitor the abnormal driving posture of the driving user.

However, in the related art, when the abnormal driving posture of the driving user is monitored, problems exist such as low monitoring efficiency and large amount of calculation, which makes the monitoring of the abnormal driving posture poor in timeliness and difficult to adapt to real-time driving scenes.

### SUMMARY

The present application provides a method and apparatus for detecting an abnormal driving posture, a device, a vehicle and a medium with higher detection efficiency and less calculation amount.

According to an aspect of the present application, a method for detecting an abnormal driving posture is provided. The method includes steps described below.

A human body key point is determined according to an acquired original image of a driving user during driving, where the human body key point includes a shoulder key point.

An abnormal driving posture of the driving user is detected according to the shoulder key point.

According to another aspect of the present application, an apparatus for detecting an abnormal driving posture is further provided. The apparatus includes a human body key point determination module and an abnormal driving posture detection module.

The human body key point determination module is configured to determine, according to an acquired original image of a driving user during driving, a human body key point, where the human body key point includes a shoulder key point.

The abnormal driving posture detection module is configured to detect, according to the shoulder key point, an abnormal driving posture of the driving user.

According to another aspect of the present application, an electronic device is provided. The electronic device includes at least one processor and a memory.

The memory is communicatively connected to the at least one processor.

The memory stores instructions executable by the at least one processor, and the instructions are executed by the at least one processor to cause the at least one processor to execute the method for detecting an abnormal driving posture according to any embodiment of the present application.

According to another aspect of the present application, a vehicle is further provided. The vehicle is provided with the electronic device according to any embodiment of the present application.

According to another aspect of the present application, a non-transitory computer-readable storage medium is further provided. The non-transitory computer-readable storage medium stores computer instructions for causing a computer to execute the method for detecting an abnormal driving posture according to any embodiment of the present application.

According to the technical solution of the present application, the efficiency of detecting the abnormal driving posture of the driving user is improved, and the amount of data calculation is reduced.

It is to be understood that the content described in this part is neither intended to identify key or important features of embodiments of the present application nor intended to limit the scope of the present application. Other features of the present application are apparent from the description provided hereinafter.

### BRIEF DESCRIPTION OF DRAWINGS

The drawings are intended to provide a better understanding of the present solution and not to limit the present application.
FIG. 1 is a flowchart of a method for detecting an abnormal driving posture according to an embodiment of the present application;
FIG. 2A is a flowchart of another method for detecting an abnormal driving posture according to an embodiment of the present application;
FIG. 2B is a schematic diagram of a second neural network model according to an embodiment of the present application;
FIG. 2C is a schematic diagram of another second neural network model according to an embodiment of the present application;
FIG. 2D is a schematic view showing a face posture angle according to an embodiment of the present application;
FIG. 3 is a flowchart of another method for detecting an abnormal driving posture according to an embodiment of the present application;
FIG. 4A is a structure block diagram of a method for detecting an abnormal driving posture according to an embodiment of the present application;
FIG. 4B is a flowchart of a method for detecting an abnormal driving posture according to an embodiment of the present application;
FIG. 5 is a structure diagram of an apparatus for detecting an abnormal driving posture according to an embodiment of the present application; and
FIG. 6 is a block diagram of an electronic device for implementing a method for detecting an abnormal driving posture according to an embodiment of the present application.

### DETAILED DESCRIPTION

Example embodiments of the present application, including details of embodiments of the present application, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present application. Similarly, description of well-known functions and constructions is omitted hereinafter for clarity and conciseness.

The method for detecting an abnormal driving posture and the apparatus for detecting an abnormal driving posture provided by the embodiments of the present application are applicable to detecting whether a driving user is in a dangerous abnormal driving posture when the driving user is driving a movable apparatus. The movable apparatus may be a vehicle, a ship or the like. The method for detecting an abnormal driving posture provided by the embodiments of the present application may be executed by the apparatus for detecting an abnormal driving posture. The apparatus may be implemented as software and/or hardware and disposed in an electronic device. The electronic device may be a mobile terminal such as a mobile phone or a tablet, or a fixed terminal embedded in a movable apparatus. Exemplarily, if the movable apparatus is a vehicle, the electronic device may be an in-vehicle terminal.

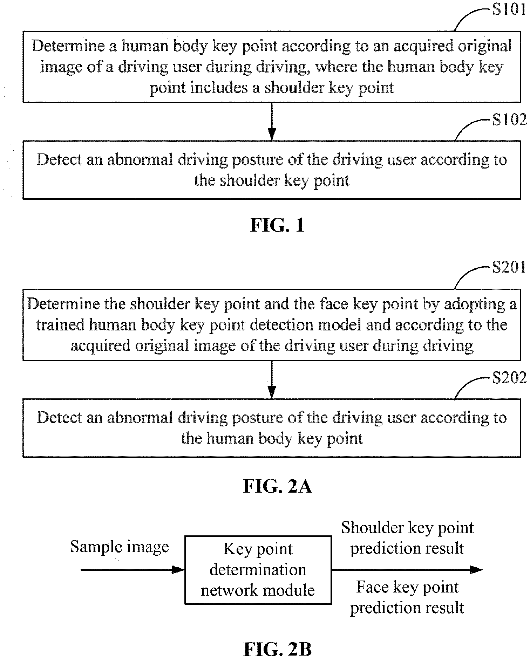

FIG. 1 is a flowchart of a method for detecting an abnormal driving posture according to an embodiment of the present application. The method includes steps described below.

In step S101, a human body key point is determined according to an acquired original image of a driving user during driving, where the human body key point includes a shoulder key point.

The original image is an image acquired when the driving user is driving a movable apparatus. The original image may be stored in an electronic device locally, other storage devices associated with the electronic device, or the cloud. When abnormal driving posture detection is required, the original image is acquired from the electronic device locally, other storage devices associated with the electronic device, or the cloud.

The human body key point is used to characterize a key point associated with the human body in the original image, for example, may be a key point on a human body contour. The number of human body key points is at least one. It is to be understood that to improve the accuracy of a subsequent abnormal driving posture detection result, at least two human body key points are generally provided.

In an embodiment, the step in which a human body key point is determined according to an acquired original image of a driving user during driving may be that a shoulder key point in an original image is determined according to a distribution feature of the head and the shoulder of the human body.

In an embodiment, the human body contour in the original image is recognized; a shoulder contour is determined according to a width proportion of the human body contour; and at least one point in the shoulder contour is selected as the shoulder key point.

It is to be understood that the determination of the should key point through the above manner features a small amount of data calculation, relatively low requirements on the computing power of the electronic device, and more convenient operation.

In another embodiment, the step in which a human body key point is determined according to an acquired original image of a driving user during driving may be that the shoulder key point is determined by adopting a trained shoulder key point detection model and according to the acquired original image of the driving user during driving, where the shoulder key point detection model is obtained by training a pre-constructed first neural network model according to an acquired sample image of a sample user during driving and a shoulder key point tag.

It is to be understood that the shoulder key point detection model is obtained by training a pre-constructed first neural network model according to an acquired sample image of a sample user during driving and a shoulder key point tag, so that the shoulder key point detection model has a shoulder key point recognition capability. Thus, in the use stage of the shoulder key point detection model, the acquired original image of the driving user during driving is taken as input data of the shoulder key point detection model, and then the shoulder key point can be directly obtained. Therefore, the integrated automatic determination of the shoulder key point is achieved, which further improves the efficiency of determining the shoulder key point and the convenience of the determination process.

It should be noted that the electronic device used to train the first neural network model and the electronic device using the shoulder key point detection model to determine the shoulder key point may be the same or different.

In step S102, an abnormal driving posture of the driving user is detected according to the shoulder key point.

In an embodiment, the step in which an abnormal driving posture of the driving user is detected according to the shoulder key point may be that if the number of determined shoulder key points is zero, it indicates that the driving user's seat is too low, or the sitting posture of the driving user is not standard enough, and at this time, it is determined that the driving user is in an abnormal driving posture; if the number of determined shoulder key points is not zero, the sitting posture of the driving user is standard by default, and at this time, it is determined that the driving user is not in an abnormal driving posture.

Since the shoulder key point may also be detected in a case where the driving user is in a non-standard sitting posture, performing abnormal driving posture detection according to only the number of shoulder key points will lead to missing recognition in the abnormal driving posture detection result. To further improve the accuracy of the abnormal driving posture detection result, in an embodiment, the step in which an abnormal driving posture of the driving user is detected according to the shoulder key point may also be that a shoulder connecting line is determined according to at least two shoulder key points, and the abnormal driving posture of the driving user is detected according to an included angle between the shoulder connecting line and a standard reference line.

Exemplarily, the standard reference line may be a horizontal reference line or a vertical reference line.

In a specific implementation, if the standard reference line is a horizontal reference line, an acute angle between the shoulder connecting line and the horizontal reference line can be determined. If the acute angle is greater than a first set acute angle threshold, it indicates that the sitting posture of the driving user is abnormal, and at this time, it is determined that the driving user is in an abnormal driving posture; if the acute angle is not greater than the first set acute angle threshold, it indicates that the sitting posture of the driving user is normal, and at this time, it is determined that the driving user is not in an abnormal driving posture. The first set acute angle threshold may be determined by a technician according to requirements or empirical values, or determined by a large number of trials. For example, the first set acute angle threshold may be 30 degrees. Correspondingly, if the acute angle is 15 degrees, it is determined that the driving user is not in an abnormal driving posture; if the acute angle is 40 degrees, it is determined that the driving user is in an abnormal driving posture.

In another specific implementation, if the standard reference line is a horizontal reference line, an obtuse angle between the shoulder connecting line and the horizontal reference line can be determined. If the obtuse angle is less than a first set obtuse angle threshold, it indicates that the sitting posture of the driving user is abnormal, and at this time, it is determined that the driving user is in an abnormal driving posture; if the obtuse angle is not less than the first set obtuse angle threshold, it indicates that the sitting posture of the driving user is normal, and at this time, it is determined that the driving user is not in an abnormal driving posture. The first set obtuse angle threshold may be determined by a technician according to requirements or empirical values, or determined by a large number of trials. The first set obtuse angle threshold and the first set acute angle threshold may be supplementary to each other. For example, the first set obtuse angle threshold may be 150 degrees. Correspondingly, if the obtuse angle is 170 degrees, it is determined that the driving user is not in an abnormal driving posture; if the obtuse angle is 130 degrees, it is determined that the driving user is in an abnormal driving posture.

In another specific implementation, if the standard reference line is a vertical reference line, an acute angle between the shoulder connecting line and the vertical reference line can be determined. If the acute angle is less than a second set acute angle threshold, it indicates that the sitting posture of the driving user is abnormal, and at this time, it is determined that the driving user is in an abnormal driving posture; if the acute angle is not less than the second set acute angle threshold, it indicates that the sitting posture of the driving user is normal, and at this time, it is determined that the driving user is not in an abnormal driving posture. The second set acute angle threshold may be determined by a technician according to requirements or empirical values, or determined by a large number of trials. The second set acute angle threshold and the first set acute angle threshold may be complementary to each other. For example, the first set acute angle threshold may be 60 degrees. Correspondingly, if the acute angle is 55 degrees, it is determined that the driving user is in an abnormal driving posture; if the acute angle is 70 degrees, it is determined that the driving user is not in an abnormal driving posture.

In another specific implementation, if the standard reference line is a vertical reference line, an obtuse angle between the shoulder connecting line and the vertical reference line can be determined. If the obtuse angle is greater than a second set obtuse angle threshold, it indicates that the sitting posture of the driving user is abnormal, and at this time, it is determined that the driving user is in an abnormal driving posture; if the obtuse angle is not greater than the second set obtuse angle threshold, it indicates that the sitting posture of the driving user is normal, and at this time, it is determined that the driving user is not in an abnormal driving posture. The second set obtuse angle threshold may be determined by a technician according to requirements or empirical values, or determined by a large number of trials. The second set obtuse angle threshold and the second set acute angle threshold may be supplementary to each other. For example, the first set obtuse angle threshold may be 120 degrees. Correspondingly, if the obtuse angle is 130 degrees, it is determined that the driving user is in an abnormal driving posture; if the obtuse angle is 110 degrees, it is determined that the driving user is not in an abnormal driving posture.

It should be noted that when the original image is an image acquired in real time of the driving user during driving in a movable apparatus, in order to reduce the threat to the driving user's safety brought by the abnormal driving posture, the driving user may also be reminded after the abnormal driving posture of the driving user is detected, so that the driving user can adjust the driving posture in time. The reminding may be achieved by at least one of sound, light, electricity, vibration or the like.

According to the embodiment of the present application, the human body key point is determined according to the acquired original image of the driving user during driving, where the human body key point includes the shoulder key point; and the abnormal driving posture of the driving user is detected according to the shoulder key point. The above technical solution provides a new abnormal driving posture detection mechanism by introducing the use of a shoulder key point to assist in abnormal driving posture detection. Moreover, due to the small amount of data calculation and high determination efficiency when the shoulder key point is determined, the detection efficiency of abnormal driving posture detection on the driving user is improved, and the amount of data calculation is reduced at the same time.

In order to further improve the accuracy of the abnormal driving posture detection result, in another embodiment of the present application, the use of a face key point is further introduced to assist in the recognition of the abnormal driving posture when the human body key point is determined on the basis of determining the shoulder key point.

Referring to FIG. 2A, a method for detecting an abnormal driving posture includes steps described below.

In step S201, the shoulder key point and the face key point are determined by adopting a trained human body key point detection model and according to the acquired original image of the driving user during driving.

The face key point is used to locate the facial features of the driving user, so as to determine the human face posture angle. Exemplarily, the face key point may be distributed points associated with the positions of the eyebrows, eyes, nose, mouth, and cheeks. The number of face key points is at least one. Typically, the face key point may be 72 key points, 150 key points or 201 key points.

The human body key point detection model is obtained by training a pre-constructed second neural network model according to an acquired sample image of a sample user during driving, a shoulder key point tag and a face key point tag.

It is to be understood that the second neural network model is trained according to the acquired sample image of the sample user during driving, and two different types of tags, i.e., a shoulder key point tag and a face key point tag, are introduced during the training process, so that the human body key point detection model finally obtained by training has the capability to recognize the two different types of key points (the shoulder key point and the face key point). Thus, in the use stage of the human body key point detection model, the acquired original image of the driving user during driving is taken as input data of the human body key point detection model, then the human body key point including the shoulder key point and the face key point can be obtained. Therefore, the integrated automatic determination of different types of human body key points is achieved, the content of the human body key point is enriched, rich data support is provided for subsequent abnormal driving posture detection, and a foundation is laid for further improving the accuracy of the abnormal driving posture detection result.

It should be noted that the electronic device used to train the second neural network model and the electronic device using the human body key point detection model to determine the human body key point may be the same or different.

Referring to FIG. 2B, in an embodiment, the second neural network model may include an independent key point determination network module for simultaneously predicting different types of human body key points on the sample image of the sample user. Correspondingly, network parameters in the second neural network model are adjusted according to a human body key point prediction result, a shoulder key point tag and a face key point tag.

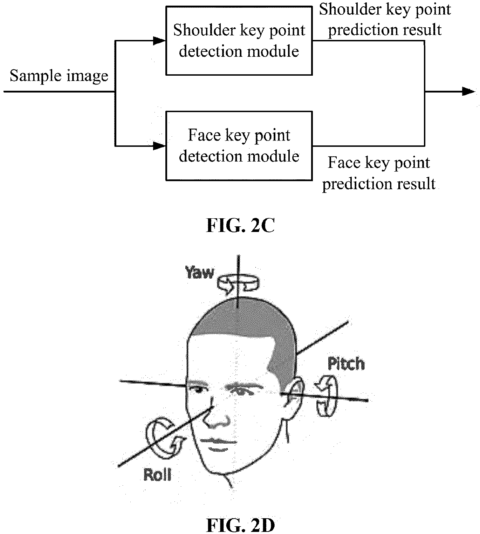

However, when different types of human body key points are simultaneously determined through the independent key point determination network module, the accuracy of the determined key points is insufficient, which ultimately affects the abnormal driving posture detection result of the driving user. In order to avoid the occurrence of the above situation, the second neural network model may also be set to a dual-stream network structure. Referring to FIG. 2C, the second neural network model includes a shoulder key point detection module and a face key point detection module. A shoulder key point prediction result of the sample image is determined by adopting the shoulder key point detection module, and a face key point prediction result of the sample image is determined by adopting the face key point detection module. Network parameters in the second neural network model are adjusted according to the shoulder key point prediction result, the face key point prediction result, the shoulder key point tag and the face key point tag.

It should be noted that in the training process of the second neural network model, an objective loss function is generally introduced, and the network parameters in the second neural network model are adjusted according to a function value of the objective loss function and the variation trend of the function value.

Exemplarily, a shoulder loss value may be determined according to the shoulder key point prediction result of the sample image and the shoulder key point tag; and a face loss value may be determined according to the face key point prediction result of the sample image and the face key point tag. The objective loss function is determined according to the shoulder loss value and the face loss value.

In a specific implementation, the step in which the objective loss function is determined according to the shoulder loss value and the face loss value may be that the sum of the shoulder loss value and the face loss value is directly determined as the objective loss function.

Since the number of face key points is generally much greater than the number of shoulder key points, the case where the face loss value is much greater than the shoulder loss value exists, resulting in that the determined objective loss function tilts towards the face loss value. As a result, the accuracy of the shoulder key point recognized by the human body key point detection model trained according to the objective loss function is relatively low, which affects the detection result of the abnormal driving posture of the driving user. In order to avoid the occurrence of the above situation, in another specific implementation, loss weights may further be respectively introduced in view of the shoulder key point and the face key point, so as to avoid the occurrence of an imbalance between the shoulder loss value and the face loss value in the objective loss function.

Exemplarily, a shoulder loss weight and a face loss weight may be respectively determined according to the number of shoulder key point tags and the number of face key point tags; and the shoulder loss value and the face loss value are respectively weighted according to the shoulder loss weight and the face loss weight to obtain the objective loss function.

Specifically, a ratio of the face loss weight to the shoulder loss weight is determined according to a ratio of the number of shoulder key point tags to the number of face key point tags. The face loss weight and the shoulder loss weight are respectively determined according to the ratio of the face loss weight to the shoulder loss weight, where the sum of the face loss weight and the shoulder loss weight is fixed, for example, may be 1. The face loss value and shoulder loss value are respectively weighted according to the face loss weight and the shoulder loss weight, and the weighted result is taken as the function value of the objective loss function.

In step S202, an abnormal driving posture of the driving user is detected according to the human body key point.

Exemplarily, an abnormal driving posture of the driving user is detected according to the face key point in the human body key point; and an abnormal driving posture of the driving user is detected according to the shoulder key point in the human body key point.

Exemplarily, if an abnormal driving posture of the driving user is detected according to at least one of the face key point or the shoulder key point, it indicates that the sitting posture of the driving user during driving is not standard enough, and at this time, it is determined that the driving user is in an abnormal driving posture; if no abnormal driving posture of the driving user is detected according to each of the face key point and the shoulder key point, it indicates that the sitting posture of the driving user during driving is relatively standard, and at this time, it is determined that the driving user is not in an abnormal driving posture.

In a specific implementation, the step in which an abnormal driving posture of the driving user is detected according to the face key point in the human body key point may be that a face posture angle is determined according to the face key point, and the abnormal driving posture of the driving user is detected according to the face posture angle.

The face posture angle is used to represent the angle of a human face in the space three-dimensional coordinate system. Exemplarily, the face posture angle may include a yaw angle, a roll angle and a pitch angle. Referring to a schematic view showing a face posture angle in FIG. 2D, Yaw corresponds to driving user's left and right rotation; Roll corresponds to driving user's in-plane rotation; and Pitch corresponds to driving user's up and down rotation

The step in which the abnormal driving posture of the driving user is detected according to the face posture angle may be that if the yaw angle is greater than a set yaw angle threshold, it indicates that the left or right rotation angle of the driving user is excessive large, for example, the driving user turns the head to talk with another user, and at this time, it is determined that the driving user is in an abnormal driving posture; if the yaw angle is not greater than the set yaw angle threshold, it indicates that the left or right rotation angle of the driving user will not bring safety hazards, and at this time, it is determined that the driving user is not in an abnormal driving posture. The set yaw angle threshold may be determined by a technician according to requirements or empirical values, or repeatedly determined by a large number of trials. For example, the set yaw angle threshold may be set as 30 degrees.

It should be noted that in order to avoid misjudgment of the abnormal driving posture in situations where the driving user may turn left or right to look at a rearview mirror during driving, the set yaw angle threshold may be set appropriately higher, or the manner of determining the abnormal driving posture according to the yaw angle may be abandoned.

The step in which the abnormal driving posture of the driving user is detected according to the face posture angle may be that if the roll angle is greater than a set roll angle threshold, it indicates that the in-plane rotation angle of the driving user is excessive large, for example, the driving user holds a mobile phone by the head for communication, and at this time, it is determined that the driving user is in an abnormal driving posture; if the roll angle is not greater than the set roll angle threshold, it indicates that the in-plane rotation angle of the driving user will not bring safety hazards, for example, the driving user inclines the ears for listening, and at this time, it is determined that the driving user is not in an abnormal driving posture. The set roll angle threshold may be determined by a technician according to requirements or empirical values, or repeatedly determined by a large number of trials. For example, the set roll angle threshold may be set as 30 degrees.

The step in which the abnormal driving posture of the driving user is detected according to the face posture angle may be that if the pitch angle is greater than a set pitch angle threshold, it indicates that the driving user raises or lowers the head, for example, the driving user leans over to pick up objects, lowers the head to play with a mobile phone or looks up at the ceiling, etc., and at this time, it is determined that the driving user is in an abnormal driving posture; if the pitch angle is not greater than the set pitch angle threshold, it indicates that the pitch angle of the driving user will not bring safety hazards, for example, the driving user raises looks up at an inside rearview mirror, and at this time, it is determined that the driving user is not in an abnormal driving posture. The set pitch angle threshold may be determined by a technician according to requirements or empirical values, or repeatedly determined by a large number of trials. For example, the set pitch angle threshold may be set as 30 degrees.

At least two of the set yaw angle threshold, the set roll angle threshold, or the set pitch angle threshold may be the same or different.

According to the embodiment of the present application, to achieve the operation of determining the human body key point, the shoulder key point and the face key point are determined by adopting the trained human body key point detection model and according to the acquired original image of the driving user during driving. The human body key point detection model is obtained by training the pre-constructed second neural network model according to an acquired sample image of the sample user during driving, the shoulder key point tag and the face key point tag. According to the above technical solution, the integrated automatic determination of different types of human body key points is achieved, the content of the human body key point is enriched, rich data support is provided for subsequent abnormal driving posture detection, and a foundation is laid for further improving the accuracy of the abnormal driving posture detection result.

In the above technical solution, the acquired original image of the driving user during driving is directly processed for abnormal driving posture detection. However, due to the difference in height and weight of different driving users and the difference in specifications of image acquisition devices in different movable apparatus, positions of driving users in acquired original images are different. As a result, the universality is poor when the original image is processed, which also affects the accuracy of the final abnormal driving posture detection result. At the same time, since the original image carries a lot of interference information, the amount of data calculation is relative large when the original image is used for abnormal driving posture detection. In order to avoid the occurrence of the above situations, in another embodiment of the present application, the original image may further be preprocessed when the human body key point is determined, and then the preprocessed image is used for the human body key point detection.

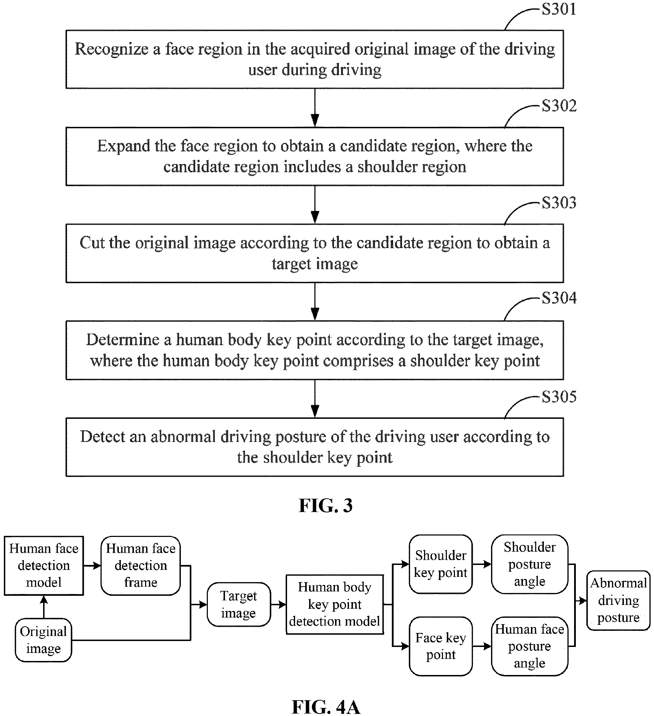

Referring to FIG. 3, a method for detecting an abnormal driving posture includes steps described below.

In step S301, a face region in the acquired original image of the driving user during driving is recognized.

Exemplarily, the face region in the original image may be recognized according to the human face proportion; or the face region in the original image may be recognized through a human face detection module based on deep learning.

In step S302, the face region is expanded to obtain a candidate region, where the candidate region includes a shoulder region.

Exemplarily, the face region may be expanded in at least one direction to obtain a candidate region including a shoulder region. The at least one direction may include, but is not limited to, a transverse direction, a longitudinal direction, and a diagonal direction of the frame of the face region.

In a specific implementation, the step in which the face region is expanded to obtain a candidate region may be that the face region is expanded, by taking the face region as a center, towards a direction of two ears by a first proportion and towards a direction perpendicular to the direction of the two ears by a second proportion respectively to obtain the candidate region. The direction of two ears refers to a direction of a connecting line of the two ears. The first proportion and the second proportion may be the same or different, and the specific values of the first proportion and the second proportion may be determined by a technician according to requirements or empirical values, or repeatedly determined by a large number of trials.

In step S303, the original image is cut according to the candidate region to obtain a target image.

In step S304, the human body key point is determined according to the target image. The human body key point includes the shoulder key point.

The target image is substituted for the preceding original image, and the human body key point is determined in a similar manner to the preceding original image.

In an embodiment, the shoulder key point in the target image is determined according to a distribution feature of the head and the shoulder of the human body.

In an embodiment, a human body contour in the target image is recognized; a shoulder contour is determined according to a width proportion of the human body contour; and at least one point in the shoulder contour is selected as the shoulder key point.

It is to be understood that the determination of the should key point through the above manner features a small amount of data calculation, relatively low requirements on the computing power of the electronic device, and more convenient operation.

In another embodiment, the shoulder key point is determined by adopting a trained shoulder key point detection model and according to the target image, where the shoulder key point detection model is obtained by training a pre-constructed first neural network model according to a sample target image of a sample user and a shoulder key point tag.

In another embodiment, the shoulder key point and the face key point are determined by adopting a trained human body key point detection model and according to the target image. The human body key point detection model is obtained by training a pre-constructed second neural network model according to a sample target image of a sample user, a shoulder key point tag and a face key point tag.

In step S305, an abnormal driving posture of the driving user is detected according to the shoulder key point.

According to the embodiment of the present application, the operation of determining the human body key point is refined into: recognizing the face region in the acquired original image of the driving user during driving; expanding the face region to obtain the candidate region including the shoulder region; cutting the original image according to the candidate region to obtain the target image; and determining the human body key point according to the target image. According to the above technical solution, the original image is cut to obtain the target image, so that the influence of the interference information in the non-candidate region in the original image on the human body key point detection process is reduced when the human body key point is determined. Therefore, the amount of data calculation during human body key point detection is reduced, the accuracy of the human body key point determination result is improved at the same time, and a foundation is laid for improving the accuracy of the subsequent abnormal driving posture detection result.

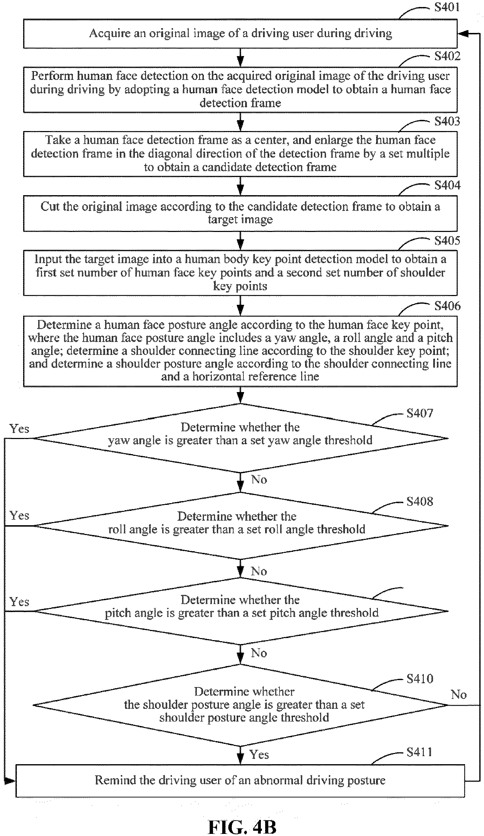

Further, on the basis of the above technical solutions, the present application further provides an example embodiment for abnormal driving posture detection. The embodiment is applicable to detecting an abnormal driving posture of a driving user in a vehicle. Referring to FIG. 4A and FIG. 4B, a method for detecting an abnormal driving posture, applied to an in-vehicle terminal, includes steps described below.

In step S401, an original image of a driving user during driving is acquired.

In step S402, human face detection is performed on the acquired original image of the driving user during driving by adopting a human face detection model to obtain a human face detection frame.

The face detection model may be implemented based on a first deep learning network. For example, a six-layer convolutional network may be adopted to extract basic human face features, and each layer of the convolutional network implements one time of downsampling on an input image. Based on the final three layers of the convolutional neural network, a fixed number of human face anchor frames of different sizes are preset respectively, the human face detection frame regression is performed, and finally the coordinate information of the human face detection frame is obtained. The coordinate information may be determined by using the coordinates of four vertices of a rectangular frame, or it is also feasible to select an origin, determine a coordinate of the origin and represent a rectangular frame according to the coordinate of the origin and the lengths of two sides of the rectangular frame vertical to each other.

In step S403, with the human face detection frame taken as a center, the human face detection frame is enlarged in the diagonal direction of the detection frame by a set multiple to obtain a candidate detection frame.

The set multiple may be preset by a technician according to requirements or empirical values. For example, the set multiple may be 3 times.

In step S404, the original image is cut according to the candidate detection frame to obtain a target image.

In step S405, the target image is input into a human body key point detection model to obtain a first set number of human face key points and a second set number of shoulder key points.

The first set number may be 72; and the second set number may be 2.

The human body key point detection model is implemented based on a second deep learning network. The second deep learning network may be the same as or different from the first deep learning network. Exemplarily, the second deep learning network may be implemented by adopting mobile deep neural networks (MobileNets).

During a training stage of the human body key point detection model, a sample target image corresponding to a sample user is input into a to-be-trained human body key point detection model to obtain a shoulder key point prediction result and a face key point prediction result. A shoulder loss value is determined according to the shoulder key point prediction result and a shoulder key point tag; a face loss value is determined according to the face key point prediction result and a face key point tag. The ratio of the first set number to the sum of the first set number and the second set number is taken as a shoulder loss weight; the ratio of the second set number to the sum of the first set number and the second set number is taken as a face loss weight. The shoulder loss value and face loss value are respectively weighted according to the shoulder loss weight and the face loss weight to obtain an objective loss function. Network parameters in the human body key point detection model are adjusted according to a function value of the objective loss function and a variation trend of the function value.

In step S406, a human face posture angle is determined according to the human face key point, where the human face posture angle includes a yaw angle, a roll angle and a pitch angle; a shoulder connecting line is determined according to the shoulder key point; and a shoulder posture angle is determined according to the shoulder connecting line and a horizontal reference line.

In step S407, whether the yaw angle is greater than a set yaw angle threshold is determined; if the yaw angle is not greater than the set yaw angle threshold, step S408 is executed; otherwise, step S411 is executed.

In step S408, whether the roll angle is greater than a set roll angle threshold is determined; if the roll angle is not greater than the set roll angle threshold, step S409 is executed; otherwise, step S411 is executed.

In step S409, whether the pitch angle is greater than a set pitch angle threshold is determined; if the pitch angle is not greater than the set pitch angle threshold, step S410 is executed; otherwise, step S411 is executed.

In step S410, whether the shoulder posture angle is greater than a set shoulder posture angle threshold is determined; if the shoulder posture angle is greater than the set shoulder posture angle threshold, step S411 is executed; otherwise, step S401 is returned to and executed.

In step S411, the driving user is reminded of an abnormal driving posture, and step S401 is returned to and executed.

The set yaw angle threshold, the set roll angle threshold, the set pitch angle threshold and the set shoulder posture angle threshold may be determined by a technician according to requirements or empirical values, or repeatedly determined by a large number of trials. Values of all thresholds may be the same, partly the same, or different.

Steps S407 to S410 may be executed sequentially or simultaneously, and some of steps S407 to S410 may be selected to be executed according to requirements, which is not limited in the embodiment of the present application.

The embodiment of the present application provides a new abnormal driving posture detection mechanism by introducing the use of a shoulder key point to detect an abnormal driving posture of a driving user. Meanwhile, the accuracy of the abnormal driving posture detection result is improved through the manner of the joint detection of the shoulder key point and the face key point. In addition, according to the present application, only one time of key point detection on an original image is needed, and no additional convolutional neural network model is needed, so that the amount of data calculation in the process of abnormal driving posture detection is reduced.

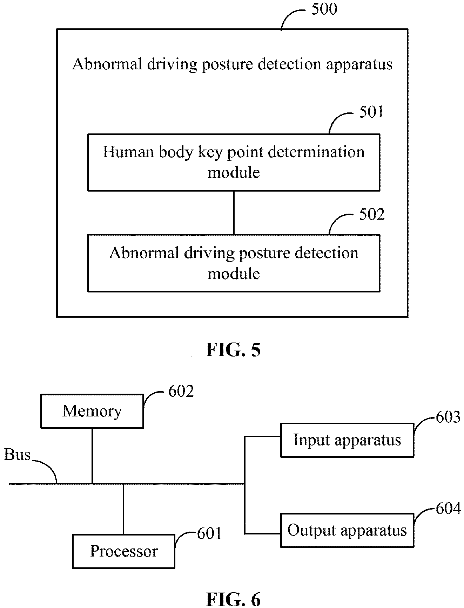

As implementations of the preceding methods for detecting an abnormal driving posture, the present application further provides an embodiment of a virtual apparatus for implementing the method for detecting an abnormal driving posture. Further referring to FIG. 5, an apparatus for detecting an abnormal driving posture 500 includes a human body key point determination module 501 and an abnormal driving posture detection module 502.

The human body key point determination module 501 is configured to determine, according to an acquired original image of a driving user during driving, a human body key point, where the human body key point includes a shoulder key point.

The abnormal driving posture detection module 502 is configured to detect, according to the shoulder key point, an abnormal driving posture of the driving user.

According to the embodiment of the present application, the human body key point determination module determines, according to the acquired original image of the driving user during driving, the human body key point, where the human body key point includes the shoulder key point; the abnormal driving posture detection module detects, according to the shoulder key point, the abnormal driving posture of the driving user. The above technical solution provides a new abnormal driving posture detection mechanism by introducing the use of the shoulder key point to assist in abnormal driving posture detection. Moreover, due to the small amount of data calculation and high determination efficiency when the shoulder key point is determined, the detection efficiency of abnormal driving posture detection on the driving user is improved, and the amount of data calculation is reduced at the same time.

Further, the human body key point determination module 501 includes a shoulder key point determination unit.

The shoulder key point determination unit is configured to determine, by adopting a trained shoulder key point detection model and according to the acquired original image of the driving user during driving, the shoulder key point.

The shoulder key point detection model is obtained by training a pre-constructed first neural network model according to an acquired sample image of a sample user during driving and a shoulder key point tag.

Further, the human body key point further includes a face key point.

The human body key point determination module 501 includes a human body key point determination unit.

The human body key point determination unit is configured to determine, by adopting a trained human body key point detection model and according to the acquired original image of the driving user during driving, the shoulder key point and the face key point.

The human body key point detection model is obtained by training a pre-constructed second neural network model according to an acquired sample image of a sample user during driving, a shoulder key point tag and a face key point tag.

Further, the second neural network model includes a shoulder key point detection module and a face key point detection module.

The shoulder key point detection module is configured to determine a shoulder key point prediction result of the sample image.

The face key point detection module is configured to determine a face key point prediction result of the sample image.

The apparatus further includes a parameter adjustment module.

The parameter adjustment module is configured to adjust, according to the shoulder key point prediction result, the face key point prediction result, the shoulder key point tag and the face key point tag, network parameters in the second neural network model.

Further, the apparatus further includes an objective loss function construction module, which is configured to construct an objective loss function during training the pre-constructed second neural network model.

The objective loss function construction module includes a loss weight determination unit, a loss value determination unit and an objective loss function obtaining unit.

The loss weight determination unit is configured to determine, according to the number of shoulder key point tags and the number of face key point tags, a shoulder loss weight and a face loss weight respectively.

The loss value determination unit is configured to determine, according to the shoulder key point prediction result of the sample image and the shoulder key point tag, a shoulder loss value; and determine, according to the face key point prediction result of the sample image and the face key point tag, a face loss value.

The objective loss function obtaining unit is configured to respectively weight, according to the shoulder loss weight and the face loss weight, the shoulder loss value and the face loss value to obtain the objective loss function.

Further, the key point determination module 501 includes a face region recognition unit, a candidate region obtaining unit, a target image obtaining unit and a human body key point determination unit.

The face region recognition unit is configured to recognize a face region in the acquired original image of the driving user during driving.

The candidate region obtaining unit is configured to expand the face region to obtain a candidate region, where the candidate region includes a shoulder region.

The target image obtaining unit is configured to cut the original image according to the candidate region to obtain a target image.

The human body key point determination unit is configured to determine, according to the target image, the human body key point.

Further, the candidate region obtaining unit includes a candidate region obtaining subunit.

The candidate region obtaining subunit is configured to expand, by taking the face region as a center, the face region towards a direction of two ears by a first proportion and towards a direction perpendicular to the direction of the two ears by a second proportion respectively to obtain the candidate region.

Further, the abnormal driving posture detection module 502 includes a shoulder connecting line determination unit and an abnormal driving posture detection unit.

The shoulder connecting line determination unit is configured to determine, according to at least two shoulder key points, a shoulder connecting line.

The abnormal driving posture detection unit is configured to detect, according to an included angle between the shoulder connecting line and a standard reference line, the abnormal driving posture of the driving user.

The preceding apparatus for detecting an abnormal driving posture may execute the method for detecting an abnormal driving posture according to any embodiment of the present application and has function modules and beneficial effects corresponding to the execution of the method for detecting an abnormal driving posture.

According to an embodiment of the present application, the present application further provides an electronic device and a readable storage medium.

FIG. 6 is a block diagram of an electronic device for implementing a method for detecting an abnormal driving posture according to an embodiment of the present application. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, on-board equipment, personal digital assistants, cellphones, smartphones, wearable devices and other similar computing apparatus. Herein the shown components, the connections and relationships between these components, and the functions of these components are illustrative only and are not intended to limit the implementation of the present application as described and/or claimed herein.

As shown in FIG. 6, the electronic device includes one or more processors 601, a memory 602, and interfaces for connecting various components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output apparatus (for example, a display device coupled to an interface). In other embodiments, if required, multiple processors and/or multiple buses may be used with multiple memories. Similarly, multiple electronic devices may be connected, each providing some necessary operations (for example, serving as a server array, a set of blade servers or a multi-processor system). FIG. 6 shows one processor 601 by way of example.

The memory 602 is the non-transitory computer-readable storage medium provided in the present application. The memory stores instructions executable by at least one processor to cause the at least one processor to execute the method for detecting an abnormal driving posture provided in the present application. The non-transitory computer-readable storage medium of the present application stores computer instructions for causing a computer to execute the method for detecting an abnormal driving posture provided in the present application.

The memory 602 as a non-transitory computer-readable storage medium is configured to store a non-transitory software program, a non-transitory computer-executable program and modules, for example, program instructions/modules corresponding to the method for detecting an abnormal driving posture provided in the embodiments of the present application (for example, the human body key point determination module 501 and the abnormal driving posture detection module 502 shown in FIG. 5). The processor 601 executes non-transitory software programs, instructions and modules stored in the memory 602 to execute various function applications and data processing of a server, that is, implement the method for detecting an abnormal driving posture in the preceding method embodiments.

The memory 602 may include a program storage region and a data storage region. The program storage region may store an operating system and an application program required by at least one function. The data storage region may store data created based on the use of the electronic device for implementing the method for detecting an abnormal driving posture. Additionally, the memory 602 may include a high-speed random-access memory and a non-transitory memory, for example, at least one disk memory, a flash memory or another non-transitory solid-state memory. In some embodiments, the memory 602 may include memories disposed remote from the processor 601, and these remote memories may be connected, through a network, to the electronic device for performing the method for detecting an abnormal driving posture. Examples of the preceding network include, but are not limited to, the Internet, an intranet, a local area network, a mobile communication network and a combination thereof.

The electronic device for implementing the method for detecting an abnormal driving posture may further include an input apparatus 603 and an output apparatus 604. The processor 601, the memory 602, the input apparatus 603 and the output apparatus 604 may be connected by a bus or in other manners. FIG. 6 uses connection by a bus as an example.

The input apparatus 603 can receive input number or character information and generate key signal input related to user settings and function control of the electronic device for implementing the method for detecting an abnormal driving posture. The input apparatus 603 may be, for example, a touchscreen, a keypad, a mouse, a trackpad, a touchpad, a pointing stick, one or more mouse buttons, a trackball or a joystick. The output apparatus 604 may be, for example, a display device, an auxiliary lighting apparatus (for example, a light-emitting diode (LED)) or a haptic feedback apparatus (for example, a vibration motor). The display device may include, but is not limited to, a liquid-crystal display (LCD), a light-emitting diode (LED) display or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order that interaction with a user is provided, the systems and techniques described herein may be implemented on a computer. The computer has a display apparatus (for example, a cathode-ray tube (CRT) or liquid-crystal display (LCD) monitor) for displaying information to the user; and a keyboard and a pointing apparatus (for example, a mouse or a trackball) through which the user can provide input to the computer. Other types of apparatus may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), the Internet and a blockchain network.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

The technical solutions of the embodiments of the present application, provide a new abnormal driving posture detection mechanism by introducing the use of a shoulder key point to assist in abnormal driving posture detection. Moreover, due to the small amount of data calculation and high determination efficiency when the shoulder key point is determined, the detection efficiency of abnormal driving posture detection on the driving user is improved, and the amount of data calculation is reduced at the same time.

The embodiments of the present application further provide a vehicle provided with the electronic device shown in FIG. 6.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

The scope of the present application is not limited to the preceding embodiments. It is to be understood by those skilled in the art that various modifications, combinations, sub-combinations and substitutions may be made depending on design requirements and other factors. Any modifications, equivalent substitutions, improvements and the like made within the spirit and principle of the present application are within the scope of the present application.

## Claims

1. A method for detecting an abnormal driving posture, comprising:
determining (S101), according to an acquired original image of a driving user during driving, a human body key point, wherein the human body key point comprises a shoulder key point; and
detecting (SI02), according to the shoulder key point, an abnormal driving posture of the driving user.

2. The method according to claim 1, wherein the determining, according to the acquired original image of the driving user during driving, the human body key point comprises:
determining, by adopting a trained shoulder key point detection model and according to the acquired original image of the driving user during driving, the shoulder key point,
wherein the shoulder key point detection model is obtained by training a pre-constructed first neural network model according to an acquired sample image of a sample user during driving and a shoulder key point tag.

3. The method according to claim 1, wherein the human body key point further comprises a face key point; and
the determining, according to the acquired original image of the driving user during driving, the human body key point comprises:
determining (S201), by adopting a trained human body key point detection model and according to the acquired original image of the driving user during driving, the shoulder key point and the face key point,
wherein the human body key point detection model is obtained by training a pre-constructed second neural network model according to an acquired sample image of a sample user during driving, a shoulder key point tag and a face key point tag.

4. The method according to claim 3, wherein the second neural network model comprises a shoulder key point detection module and a face key point detection module; and
the training the pre-constructed second neural network model comprises:
determining, by adopting the shoulder key point detection module, a shoulder key point prediction result of the sample image;
determining, by adopting the face key point detection module, a face key point prediction result of the sample image; and
adjusting, according to the shoulder key point prediction result, the face key point prediction result, the shoulder key point tag and the face key point tag, network parameters in the second neural network model.

5. The method according to claim 4, wherein an objective loss function adopted during training the pre-constructed second neural network model is constructed by steps of:
respectively determining, according to a number of shoulder key point tags and a number of face key point tags, a shoulder loss weight and a face loss weight;
determining, according to the shoulder key point prediction result of the sample image and the shoulder key point tag, a shoulder loss value; and determining, according to the face key point prediction result of the sample image and the face key point tag, a face loss value; and
respectively weighting, according to the shoulder loss weight and the face loss weight, the shoulder loss value and the face loss value to obtain the objective loss function.

6. The method according to claim 1, wherein the determining, according to the acquired original image of the driving user during driving, the human body key point comprises:
recognizing (S301) a face region in the acquired original image of the driving user during driving;
expanding (S302) the face region to obtain a candidate region, wherein the candidate region comprises a shoulder region;
cutting (S303) the original image according to the candidate region to obtain a target image; and
determining (S304), according to the target image, the human body key point.

7. The method according to claim 6, wherein the expanding the face region to obtain the candidate region comprises:
expanding, by taking the face region as a center, the face region towards a direction of two ears by a first proportion and towards a direction perpendicular to the direction of the two ears by a second proportion respectively to obtain the candidate region.

8. The method according to claim 1, wherein the detecting, according to the shoulder key point, the abnormal driving posture of the driving user comprises:
determining, according to at least two shoulder key points, a shoulder connecting line; and
detecting, according to an included angle between the shoulder connecting line and a standard reference line, the abnormal driving posture of the driving user.

9. An apparatus for detecting an abnormal driving posture, comprising:
a human body key point determination module (501), which is configured to determine, according to an acquired original image of a driving user during driving, a human body key point, wherein the human body key point comprises a shoulder key point; and
an abnormal driving posture detection module (502), which is configured to detect, according to the shoulder key point, an abnormal driving posture of the driving user.

10. The apparatus according to claim 9, wherein the human body key point determination module (501) comprises:
a shoulder key point determination unit, which is configured to determine, by adopting a trained shoulder key point detection model and according to the acquired original image of the driving user during driving, the shoulder key point;
wherein the shoulder key point detection model is obtained by training a pre-constructed first neural network model according to an acquired sample image of a sample user during driving and a shoulder key point tag.

11. The apparatus according to claim 9, wherein the human body key point further comprises a face key point; and
the human body key point determination module (501) comprises:
a human body key point determination unit, which is configured to determine, by adopting a trained human body key point detection model and according to the acquired original image of the driving user during driving, the shoulder key point and the face key point;
wherein the human body key point detection model is obtained by training a pre-constructed second neural network model according to an acquired sample image of a sample user during driving, a shoulder key point tag and a face key point tag.

12. The apparatus according to claim 11, wherein the second neural network model comprises a shoulder key point detection module and a face key point detection module; wherein
the shoulder key point detection module is configured to determine a shoulder key point prediction result of the sample image; and
the face key point detection module is configured to determine a face key point prediction result of the sample image; and
the apparatus further comprises a parameter adjustment module, which is configured to:
adjust, according to the shoulder key point prediction result, the face key point prediction result, the shoulder key point tag and the face key point tag, network parameters in the second neural network model.

13. An electronic device, comprising:
at least one processor (S601); and
a memory (S602) communicatively connected to the at least one processor (S601), wherein
the memory (S602) stores instructions executable by the at least one processor (S601), and the instructions are executed by the at least one processor (S601) to cause the at least one processor (S601) to execute the method for detecting the abnormal driving posture of any one of claims 1 to 8.

14. A vehicle, comprising the electronic device of claim 13.

15. A non-transitory computer-readable storage medium storing computer instructions for causing a computer to execute the method for detecting the abnormal driving posture of any one of claims 1 to 8.
